(19) Europäisches Patentamt
European Patent Office
Office européen des brevets

(11) EP 3 197 198 A1

(12) EUROPEAN PATENT APPLICATION

(43) Date of publication:
26.07.2017 Bulletin 2017/30

(51) Int Cl.:
H04W 24/02 (2009.01)　　　H04W 24/04 (2009.01)
H04W 24/08 (2009.01)　　　H04L 12/26 (2006.01)
H04W 16/18 (2009.01)　　　H04L 12/24 (2006.01)

(21) Application number: 16202360.0

(22) Date of filing: 06.12.2016

(84) Designated Contracting States:
AL AT BE BG CH CY CZ DE DK EE ES FI FR GB GR HR HU IE IS IT LI LT LU LV MC MK MT NL NO PL PT RO RS SE SI SK SM TR
Designated Extension States:
BA ME
Designated Validation States:
MA MD

(30) Priority: 22.01.2016 US 201615004179

(71) Applicant: Hitachi, Ltd.
Tokyo 100-8280 (JP)

(72) Inventors:
• AKOUM, Salam
Santa Clara, CA 95054 (US)
• OESTERGAARD, Jeremy
Santa Clara, CA 95054 (US)
• GAUR, Sudhanshu
Santa Clara, CA 95054 (US)

(74) Representative: Addiss, John William et al
Mewburn Ellis LLP
City Tower
40 Basinghall Street
London EC2V 5DE (GB)

(54) A METHOD FOR ANALYZING AND INFERRING WIRELESS NETWORK PERFORMANCE

(57) Example implementations involve a quality analysis and optimization module to monitor the health of the wireless channels in WLAN networks. Example implementations involve a framework for deriving a model of wireless link quality metrics as a function of higher layer transport protocols metrics. Example implementations then utilize the model to analyze and perform root cause analysis and optimization of WLAN networks to improve the quality of experience of wireless users.

FIG. 2

**Description**

The present disclosure is generally directed to network performance, and more specifically, to systems and methods to understand the interplay and infer the status of the wireless network parameters from monitoring higher layer transport protocol parameters.

In the related art, IEEE 802.11 technology is gaining increasing attention as the solution to provide ubiquitous connectivity to both indoors and outdoors situations on par with cellular networks. The success of this technology continues to grow as high speed versions are produced (e.g., 802.11 ac, 802.11ad) and new market opportunities such as public wireless hotspots (e.g. cable wireless) are explored. The considerable increase in the number of users and the demand for high speed high bandwidth applications requires planning of the networks and design of the mechanisms to improve the quality of experience of the users. Maximization of the user quality of experience may require the development of an accurate model to analyze and subsequently pinpoint the pain points in the network.

Related art implementations have focused on analyzing or measuring the performance of the 802.11 network, or the Transmission Control Protocol (TCP) performance for 802.11 networks. To monitor the end user wireless quality, related art implementations involve injecting a scriplet into hypertext transmission protocols (HTTP) requests to periodically test the latency of HTTP requests from the mobile devices to the application server. An example of such a related art implementation can be found, for example, in U.S. Patent No. 8,583,777, herein incorporated by reference in its entirety for all purposes. Related art implementations also involve a system where data gathering software is installed on the wireless device for collecting device parametric data, network parametric data and event data. An example of such a related art implementation can be found, for example, in U.S. Patent No. 6,745,011, herein incorporated by reference in its entirety for all purposes.

In another related art implementation, the client downloads an active control measuring tool object in response to a request for content from the server to make network measurements, via direct socket access and returns the measurement results. An example of such a related art implementation can be found, for example, in U.S. Patent Publication No. 2011/0119370, herein incorporated by reference in its entirety for all purposes.

Aspects of the present disclosure include an apparatus, which can involve a memory configured to store a function for determining the quality of a wireless network from a network involving a wired network and a wireless network, the quality determined based on one or more packet flow key performance indicators of the network; and a processor, configured to obtain packet flows from the network; extract one or more packet flow key performance indicators from the packet flows; and determine quality of the wireless network from the function based on the extracted one or more packet flow key performance indicators.

Aspects of the present disclosure further include a method, which can involve managing a function for determining the quality of a wireless network from a network involving a wired network and a wireless network, the quality determined based on one or more packet flow key performance indicators of the network; obtaining packet flows from the network; extracting one or more packet flow key performance indicators from the packet flows; and determining quality of the wireless network from the function based on the extracted one or more packet flow key performance indicators.

Aspects of the present disclosure further include a non-transitory computer readable medium, storing instructions for executing a process which can involve managing a function for determining quality of a wireless network from a network involving a wired network and the wireless network, the quality determined based on one or more packet flow key performance indicators of the network; obtaining packet flows from the network; extracting one or more packet flow key performance indicators from the packet flows; and determining quality of the wireless network from the function based on the extracted one or more packet flow key performance indicators.

Aspects of the present disclosure further include an apparatus, which can involve a means for managing a function for determining quality of a wireless network from a network involving a wired network and the wireless network, the quality determined based on one or more packet flow key performance indicators of the network; means for obtaining packet flows from the network; means for extracting one or more packet flow key performance indicators from the packet flows; and means for determining quality of the wireless network from the function based on the extracted one or more packet flow key performance indicators.

In the drawings:

FIG. 1 shows an example wireless network where each AP serves users associated with the AP.

FIG. 2 illustrates a flow diagram of the quality analysis and optimization module shown in FIG. 1, in accordance with an example implementation.

FIG. 3 illustrates an architecture for integrating quality analysis and optimization in a carrier wi-fi network scenario, in accordance with an example implementation.

FIG. 4 illustrates an example of modeling using measurements with actual or passive content, in accordance with an example implementation.

FIG. 5 illustrates an example of active content injected by the software agent at the server, in accordance with an example implementation.

FIG. 6 illustrates an example flow diagram of the operation of the quality analysis and optimization module, in accordance with an example implementation.

FIG. 7 illustrates a flow diagram for an example operation of the optimization submodule, in accordance with an example implementation.

FIG. 8 illustrates an example computing environment with an example computer device suitable for use in some example implementations.

The following detailed description provides further details of the figures and example implementations of the present application. Reference numerals and descriptions of redundant elements between figures are omitted for clarity. Terms used throughout the description are provided as examples and are not intended to be limiting. For example, the use of the term "automatic" may involve fully automatic or semiautomatic implementations involving user or administrator control over certain aspects of the implementation, depending on the desired implementation of one of ordinary skill in the art practicing implementations of the present application.

There is no related art implementation to model and infer the interplay between the transport layer parameters and the wireless parameters such as the signal level, the link quality or the interference level. Understanding these interactions can facilitate identifying and explaining the performance issues in the network. None of the related art implementations involve implementations for monitoring the wireless network performance from higher layer transport protocol metrics using a software agent at the network side.

The surge in the number of users, and the increase in multimedia streaming traffic on networks, leaves the network operators and planners straining for resources to meet the increasing demand in capacity and avoid congestion, both on the Ethernet Backhaul and the wireless access link. In an effort to guarantee an acceptable quality of experience for the users, example implementations are directed to facilitating network operators to gain insight into the quality of the wireless channels to the served users. The example implementations involve a system to infer the state of the wireless access link to the individual users from the access point (AP) by monitoring and analyzing the higher layer transport traffic end to end performance at the network side.

Example implementations involve a quality analysis and optimization module at the network side that monitors and analyzes the end to end performance of the network and infers the status of the wireless access link to the individual users from the AP.

Example implementations further involve network planning to improve the user Quality of Experience (QoE) based on the output of the analysis tool.

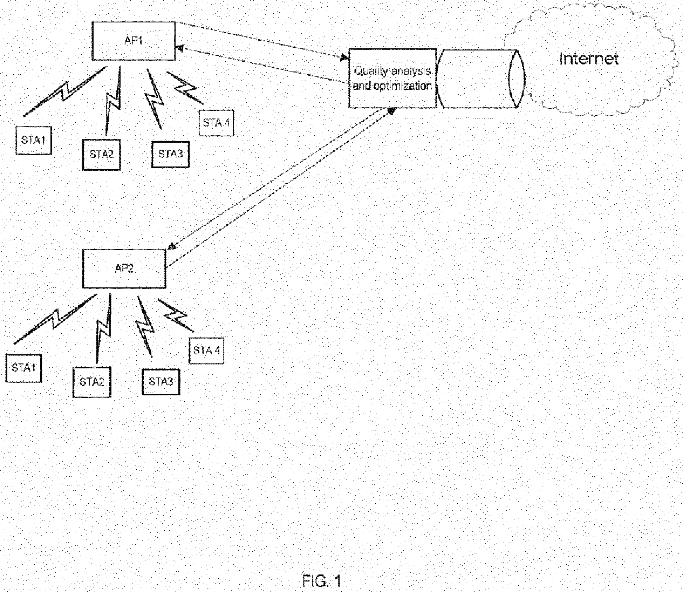

FIG. 1 shows an example wireless network where each AP serves users associated with the AP. The users are located at different locations with respect to the AP, and hence experience different link qualities and signal levels. The users also request different types of traffic (video, file transfer protocol (FTP), etc.). Different APs can be part of the same centrally controlled network, such as in an enterprise wireless environment planned by the network administrator. Different APs can also be deployed by the users and used as public hotspots whenever available as in the case of cable wireless networks. The APs are connected to the Internet through a wired backbone, e.g. Ethernet backbone. In example implementations, the backbone is configured to be fast and reliable for the desired implementation, e.g. gigabit Ethernet backbone that can support increased traffic demand. The APs can be owned and controlled by the network operator, or owned by a third party vendor running network operator traffic.

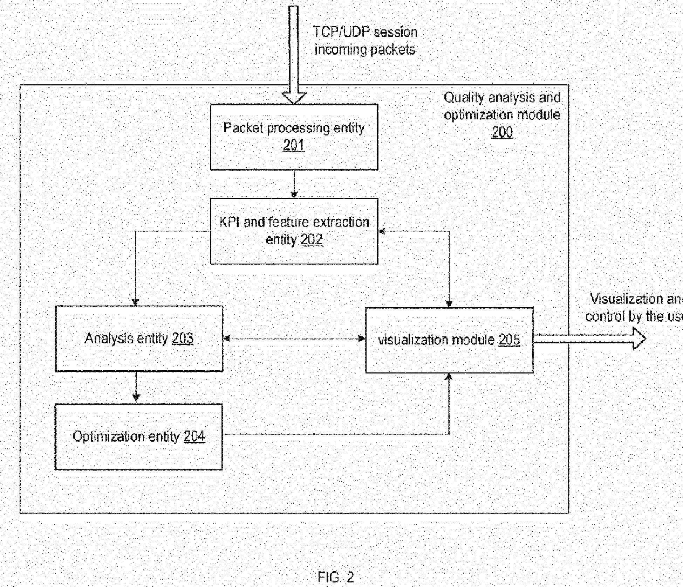

FIG. 2 illustrates a flow diagram of the quality analysis and optimization module 200 shown in FIG. 1, in accordance with an example implementation. The module involves sub-module entities that perform processing, extraction, analysis and optimization functions. The packet processing entity 201 acts on the incoming packet captures and filters the content and forwards it to the feature extraction module. The key performance indicator (KPI) and feature extraction entity 202 processes the data from the incoming packet captures such that aggregate or average performance is calculated. Example KPIs for TCP traffic include but are not limited to, aggregate round trip time (RTT), TCP throughput, duration of transmission, packet loss rate TCP anomalies (packet retransmissions, packets out of order) etc. to individual users as well as groups of users. Example KPIs for User Datagram Protocol (UDP) traffic include but are not limited to time between first packet and last packet received, total number of packets observed, etc.

The analysis entity 203 receives the KPIs from the KPI and feature extraction entity 202 and derives the quality of the wireless channels to the individual or groups of user equipment (UEs). The analysis is based on a developed model for advanced analytics that takes into account the interaction and correlation between the extracted KPIs and the KPIs for the wireless channel. The analysis entity 203 also analyzes the wireless channel KPIs and the extracted KPIs to perform for example data traffic classification and analysis, as well as insights into the health of the network from an end to end perspective. The data traffic classification may include for example classification of the users according to their traffic or link quality. Another example of data analytics performed is to classify the users according to their expected quality of experience depending on the application, e.g. which users can expect good quality of experience when performing multimedia streaming, which users can expect good quality of experience when performing wireless calling, and so on.

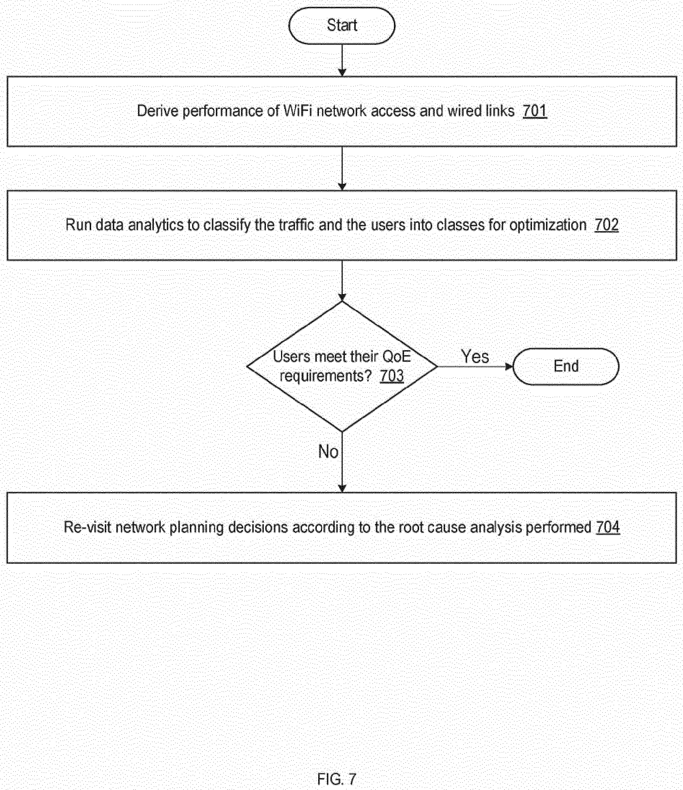

The optimization entity 204 takes input from the analysis entity 203 and provides recommendations for network planning and optimization based on the analytics performed on the user and network data. Further details of the optimization conducted in the optimization entity 204 are provided with respect to FIG. 7. The visualization entity 205 takes input from the feature extraction entity 202, the analysis entity 203, and the optimization entity 204 and creates a drill-down or drill-up visualization of the various KPIs and features of the network, as well as the analyzed data as needed. The visualization entity 205 can be controlled by the network administrator and operator, and takes requests for metrics visualization to the feature extraction, analysis, and optimization entity as needed.

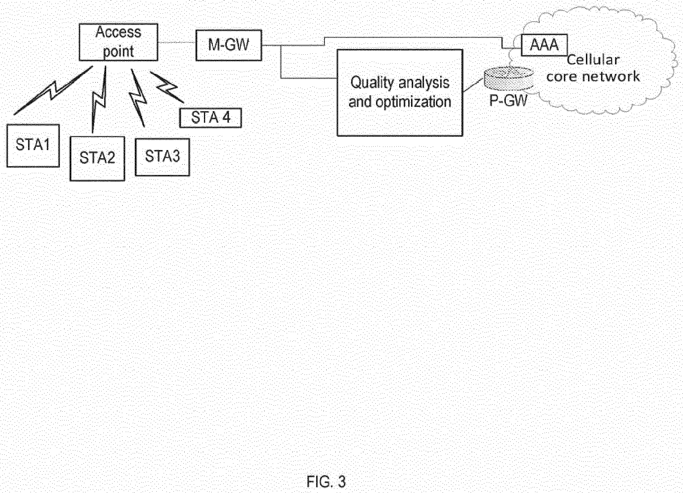

The quality analysis and optimization module 200 shown in FIG. 1 resides in the network behind the APs for the wireless local area network (WLAN), and has access to the packet flow from the packet data network (PDN) or the internet to the wireless channels. In other example implementations, the quality analysis and optimization module 200 can be implemented next to the access point, or integrated within the AP, or implemented at the wireless LAN controller depending on the desired implementation. In the example of wireless offloading from cellular networks, the analysis and optimization module 200 interfaces with the packet gateway or the evolved packet data gateway (ePDG), in such a way that for mobile operators to test the quality of the wireless channels and the QoE of their users on the WLAN networks. This holds for carrier wireless deployments where the WLAN network is trusted by the 3GPP carrier, or third party wireless deployments that the 3GPP carrier has roaming agreements with and is shown in FIG. 3, which illustrates architecture for integrating quality analysis and optimization in a carrier wireless scenario, in accordance with an example implementation. FIG 3 shows an example implementation where the quality analysis and optimization module is implemented between the mobile gateway of the wifi network and the packet gateway in the cellular network, such that the probe has access to packets going from the wifi network through the cellular core network. Other example implementations of the quality analysis and optimization module in carrier WiFi can include locating the probe at the wifi network behind the mobile gateway, having access to authentication traffic only. For the case of stadium deployments for example, the quality analysis and optimization module 200 can reside at the wireless network controller next to the internet gateway to monitor the traffic incoming to the APs in the stadium. Other example deployments such as cable WiFi, or public hotspots have the quality analysis and optimization module 200 behind the APs at the network side in such a way that such that the packet flow can be monitored.

For the analysis entity 203 in FIG. 2 to derive the quality of the wireless channels from the higher layer transport protocols KPIs and features extracted at the KPI and feature extraction entity 202, a training exercise is needed for the environment and the traffic where the wireless network is deployed. In example implementations, the training for proper modeling of the end-to-end performance can be performed using a combination of measurements, network emulators, and theoretical derivations. Example implementations provide, without loss of generality, examples of modeling using measurements and advanced analytics. Modeling can be done using either passive content or active content in accordance with the desired implementation. Passive content refers to actual content requested by the users and monitored or mirrored by a software probe for analysis. Active content can refer to test content such as test packets from a file or test video injected by the software probe agent onto the network to better estimate the health of the wireless and wired segments of the WLAN.

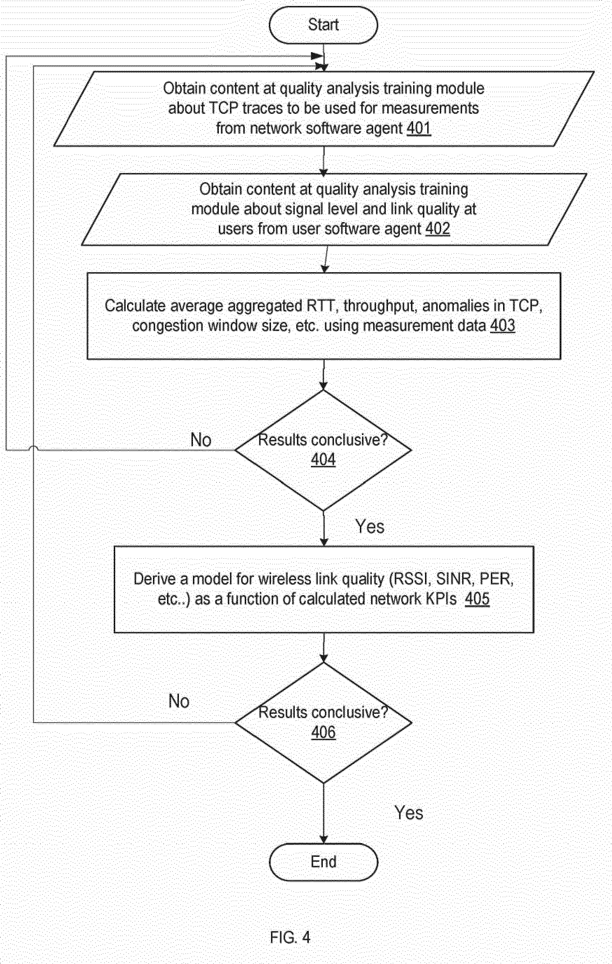

FIG. 4 illustrates an example of modeling using measurements with actual or passive content, in accordance with an example implementation. Specifically, FIG. 4 illustrates an example of a software probe at the network side called quality analysis training module. The quality analysis training module takes inputs from the packet flows as well as the users. Depending on the desired implementation, the quality analysis training module can be implemented in the quality analysis and optimization module 200, or can also be located in another portion of the network where the module can gather information from the software agent and the network and the user side. The quality analysis training module can reside in the network at the same assumed location as the quality analysis and optimization module. The quality analysis training module is used for training purposes, it takes input from a software agent at the network side (401), residing at the same location as the quality analysis and optimization module, and having access to the same packet flows as the quality analysis module. It also takes input from a software agent residing at the users (402), to collect statistics at the users' side. The software agent can be located in the same location as the quality analysis and optimization module 200, or in other locations of the network where the agent can gather information utilized by the quality analysis and optimization module 200.

In FIG. 4, a software agent residing in the network at the same location at the quality analysis and optimization module collects information about packet flows in the network at 401. Another software agent at the users (wireless clients) reports the quality of the WLAN link from the AP to each user (wireless client) to the quality analysis training module at 402. The same training module, after collecting information from the software agents (steps 401 and 402), extracts and computes KPIs from the higher layer transport protocol traces (ex. TCP and or UDP) used to transport the traffic to and from the users (wireless clients) at 403. Example KPIs are RTT, throughput, packet loss rate, latency, congestion window size, etc. using the measured packet captures from the network software agent at 403. Example calculations of KPIs include but not limited to the following given examples. The aggregate RTT for one packet flow session is computed for example by averaging over the RTT from each session between a server and a client. The server and the client can be users in the network or the server can be located on the network side or at the access point. The throughput of the download or upload session for one user for example, is measured by calculating the total amount of bytes transferred and the total delay of the transfer. The number of lost packets for a UDP-type traffic for example indicates the amount of packets sent but not received at the user.

The training module then decides based on the calculated network KPIs if the measured packet captures are conclusive to derive the quality of the end-to-end performance of the session or more measurements are needed at 404. The measurements can be judged as conclusive, for example, if there are enough data points collected to be able to make a decision about data traffic modeling. Such a decision can be made if an accurate description of the statistical characteristics of the traffic on the network can be reached, for example, if the collected data points from the packet flows can be used to capture the accurate characteristics of the network. If not enough data points can be used to capture the characteristics of the network to a desired accuracy level, then this can lead to an underestimation or over estimation of the network characteristics, in terms of utilization, congestion level, connection quality, and so on. Example decision can be made whenever the performance metrics or extracted KPIs in 403 for each user do not show variations in performance. When data is measured in an office space for example, the variations in the performance measured in 403 can be due to varying environment such as people moving or moving obstacles, this affects the performance of the transmission, such that the throughput or latency or TCP anomalies. If only one measurement is made corresponding to one short transmission session is made at any given location, this may not give a good average indication of the performance of the network at a particular location. More measurements are needed at that point such that the aggregate performance gives a relatively steady state indication of the performance of the network at that particular location. The number of measurements needed for example (ex. 10 measurements) is judged by how varying the results are from one measurement to the other. For example 10 measurements can give conclusive results (404) such that the computed KPIs in 403 are comparable from one measurement to the next.

In an example of a conclusive determination, a confidence level threshold can be applied to the sample set, which can require a sufficient number of measurements for the confidence level to be met. In such an example implementation, the confidence level threshold is set according to the desired implementation, and at 404, the confidence level is calculated for all of the measurements received. If the confidence level is met, then the results can be deemed conclusive, otherwise, the results can be deemed inconclusive. Other implementations (e.g. threshold level of measurements, etc.) can also be implemented depending on the desired implementation.

If the network KPIs extracted from packet captures are deemed conclusive (Yes), the training module collects the corresponding information obtained from the software agent at the user (402) and the derived KPIs (403). The exercise of collecting the information can be repeated with more measurements, at different times of the day, for different types of packet flows, and a different network load (number of users in the network). The collected information is used to derive a model for the wireless link characteristics as a function of the KPIs in 403. An example model links the quality of the link at user k with the KPIs in 403.

$$Q(u_k) = f(RTT_k, Th_k, L, etc..) \qquad (1)$$

Where $u_k$ is user k, Q is the quality of link at user k, $RTT_k$ is the round trip time of the session at user k, $Th_k$ is throughput at user k, L is the network load at the access point that user k is connected to.

The number of measurements collected and the number of locations and types of packet flows determine the quality of the derived training model. Collected information per user or per location can be repeated to capture a steady state behavior of the network, similar to 404. The number of data points collected also affects the quality of the training data used to derive the model used for the quality analysis and optimization module 200. The validity of the data points used to derive the model depends on the number of measurements, the number of sessions used for each measurement location, the type of users, the network load, and so on. The number and quality of the data points collected can be judged conclusive or not (406) if the number and quality are enough to derive a model for more users in the network using the training data.

Similar to 404, the conclusiveness of the number and quality of the data points of 406 can be determined based on the application of a confidence level threshold can be applied to the data points, which can require a sufficient number of data points for the confidence level to be met. In such an example implementation, the confidence level threshold is set according to the desired implementation, and at 406, the confidence level is calculated for all of the data points received. If the confidence level is met, then the results can be deemed conclusive, otherwise, the results can be deemed inconclusive. Other implementations (e.g. threshold level of data points, etc.) can also be implemented depending on the desired implementation.

The derivation of the model for the wireless link quality as a function of the KPIs in 403, can be done using mathematical modeling taking into account the relation between the end to end performance captured in the KPIs and the wireless link quality, it can also be done using statistical analysis that fits the collected data in 405 in a given model and predicts the quality of the users links as a function of the end to end KPIs in 403. Such a model can be for example a regression model whose parameters are chosen to fit the collected KPIs in 403 as a function of the parameters in 402.

An example derivation of a model of the wireless link statistics SINR as a function of the end to end round trip time of the transmission session for a given user at a given location using mathematical modeling is as follows.. The round trip time is calculated in step 403 from the network software agent. The SINR of users is obtained in 402 from the software agent at the user. For a given user with a given SINR, in step 403 a set of network KPIs is obtained. A model can be derived for RTT as a function of SINR to be later used in the quality analysis and optimization module 200. The RTT is a function of the probability of packet loss in the transmission as well as the number of retransmission attempts, the amount of fragmentation at the Multiple Access Layer (MAC). Assuming a single user transmission, in the absence of probability of packet loss due to collision, the probability of packet loss is a function of the probability of error. The probability of error is related to the bit error rate. The bit error rate, depending on the channel model used (Rayleigh Channel, Pathloss channel model), is a function of the SINR at the user This links the RTT of a user at a particular location, subject to a particular channel to the SINR of that user.

The resulting model in the quality analysis training module expresses the wireless link quality as a function of the end to end network KPIs. This derived model is used by the administrators in the quality analysis and optimization module 200.

To implement the derived model for the quality of the wireless link, the quality analysis and optimization module 200 can make use of a look up table in the analysis entity 203 to map the quality of the wireless link as a function of the measured higher layer KPIs. This look-up table is a simple implementation of the statistical analysis obtained using training. The quality analysis and optimization module 200 can further implement a mathematical formula in the analysis entitiy 203 as in equation 1 for example to derive the quality of the wireless link as a function of the end-to-end KPIs.

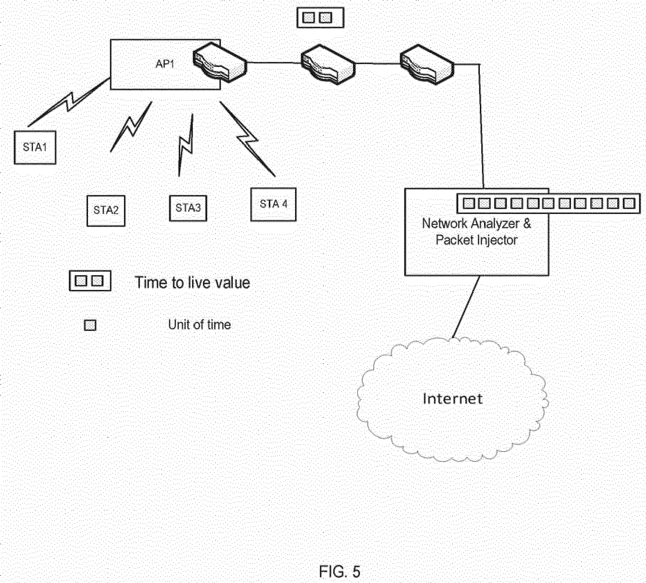

FIG. 5 illustrates an example of active content injected by the software agent at the server, in accordance with an example implementation. In this example, packets having a controlled time to live in the network are used from the server to the users to measure the end to end performance of the network. Such measurements can be utilized, for example, to measure the latency in the backhaul wired link versus the latency in the wireless network. Using a controllable time to live, the number of routers that the packets can travel is known. Measuring the time it takes these packets to travel gives the latency incurred in different segments of the network. If the packets can travel only up to the access point for example, the latency in the wired link can be computed. By measuring the total end-to-end delay of the packets that reach the user, and subtracting the derived delay in the wired link, the wireless link delay can be calculated. Injected packet flows can be test video sessions whereas the bandwidth as well as the capacity of the backhaul link and the wireless channel is measured. The performance using the active content provides more information about different segments in the network, including the wired segment. This, along with the end-to-end performance, as in the passive content in 400, can be used to derive a model for the wireless link quality and the wired link quality as a function of the end to end performance KPIs similarly to 403.

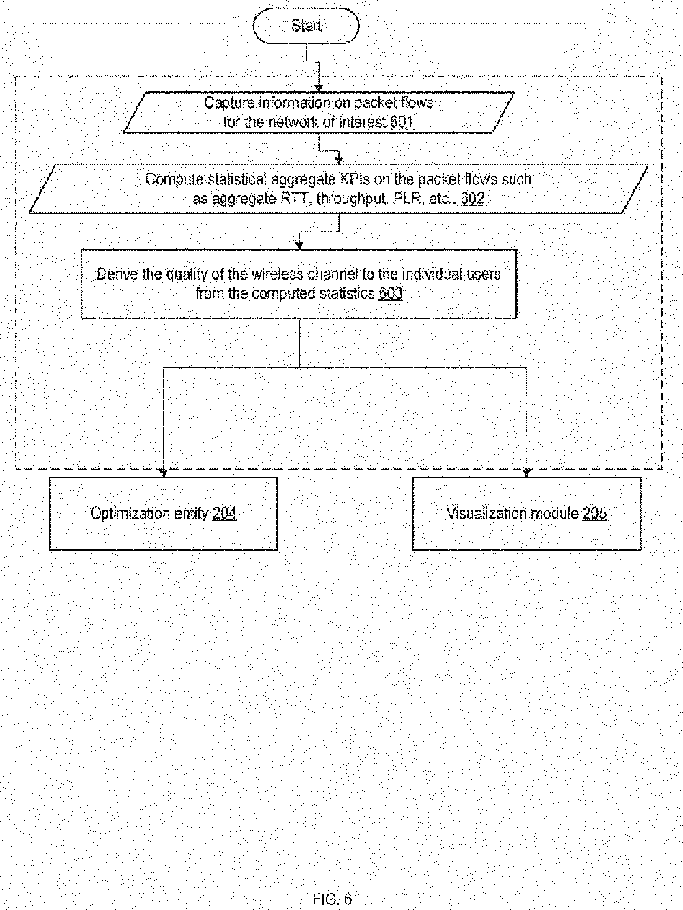

The model derived from the training exercise either by passive or active content is then used in the quality analysis and optimization module to infer and optimize the quality of the wireless network. FIG. 6 illustrates an example flow diagram of the operation of the quality analysis and optimization module 200, in accordance with an example implementation. In FIG. 6, at 601 the quality analysis module 200 monitors the packet flows of interest, and collects the corresponding statistics. Example statistics are the number of unique bytes transferred, the number of retransmitted packets, the initial round trip time for each session, the average, maximum, minimum round trip time for each session, the duration of the session, the number of duplicate transmissions, the acknowledgements received out of order, etc.. These statistics are collected using a probe that mimics the behavior of TCPdump as an example, or any other software that collects statistics about transmission sessions at the server.

At 602, the quality analysis and optimization module 200 derives statistics such as aggregate RTT, throughput, packet loss rate for individual user sessions from the statistics collected in 601. Itextracts and computes KPIs from the higher layer transport protocol traces (ex. TCP and or UDP) used to transport the traffic to and from the users (wireless clients) Example KPIs are RTT, throughput, packet loss rate, latency, congestion window size, etc. using the measured packet captures from 601.. Example calculations of KPIs include but not limited to the following given examples. The aggregate RTT for one packet flow session is computed for example by averaging over the RTT from each session between a server and a client. The server and the client can be users in the network or the server can be located on the network side or at the access point. The throughput of the download or upload session for one user for example, is measured by calculating the total amount of bytes transferred and the total delay of the transfer. The number of lost packets for a UDP-type traffic for example indicates the amount of packets sent but not received at the user.

The module 200 then derives, at 603, the KPIs of the wireless links from the computed network KPIs based on, for example, the derived network-wireless model derived in the quality analysis training module. The module 200 can make use of a look up table at 603 to map the computed KPIs in 602 to the quality of the wireless link as derived in the training module in Fig. 4. This look-up table is a simple implementation of the statistical analysis obtained using training where depending on the computed KPIs, the quality of the wireless link (e.g. RSSI) is obtained. An example of a lookup table showing the value of RSSI as well as network KPIs such as packet retransmit number, RTT, throughput, and so on, is given in Table 1 below.

Table 1 - Lookup table for RSSI values

| **RSSI** | Pckt Rtx | RTT | Thro |
|---|---|---|---|
| -50 | 3 | 20 ms | 2 Mbps |
| -57 | 4 | 23 ms | 1.5 Mbps |

Table 1 can be created based on the derived model from FIG. 4, and is an example implementation of the derived model or function used to infer the quality of the wireless link. Although the above example of Table 1 provides the model in terms of values, ranges of values (e.g. RTT of 18-22 ms) can also be utilized for lookup depending on the desired implementation.

The received signal strength information (RSSI) is an indication of the power level at the receiver antenna. The higher the RSSI number, the better the signal, and the better the wireless link between the access point and the user. In the presence of multiple clients per AP, however, the RSSI is not an indication of the expected probability of error or the expected round trip time, as the probability of collision and the collision between different clients downloads can be another reason for degradation of the wireless channel performance. The signal to interference noise ratio, and the packet loss rate serve as other indications of the health of the wireless signal. Table 2 shows a lookup table that extracts the packet loss rate from the throughput, latency, and network load computed in 602. The numbers are given for illustration purposes.

Table 2 - Lookup table for PLR values

| **PLR** | Throughput (Kbps) | Latency (s) | Network load (# of users) |
|---|---|---|---|
| 0.1 | 400 | 2 | 5 |
| 0.4 | 150 | 10 | 15 |

The quality analysis and optimization module 200 can further implement a mathematical formula in the analysis entity 603 as in equation 1 for example to derive the quality of the wireless link as a function of the end-to-end KPIs. The derived wireless link performance model is then used for network optimization decisions as shown in FIG. 7. Although the above example of Table 2 provides the model in terms of values, ranges of values (e.g. latency of 2 to 10 s) can also be utilized for lookup depending on the desired implementation.

FIG. 7 illustrates a flow diagram for an example operation of the optimization submodule, in accordance with an example implementation. At 701, the optimization submodule 204 derives the performance of the wireless and wired links. This information can be obtained directly from 603 in the module 200, for each user's traffic. At step 701, the optimization submodule implements the information of 603 in a database for later manipulation in step 702. At 702, the optimization submodule 204 executes data analytics to classify the traffic and the users into classes for optimization. This classification exercise makes use of the information in 702 and implements a machine learning algorithm to reduce the dimensions of the data and cluster different users or different APs according to the quality of the wireless link, or the quality of the backhaul, or the network load. An example algorithm that can be used is K-means clustering.

At 703, the result of the grouping and clustering exercise is used to check on the quality of the link for different users at different locations in the network corresponding to different APs. A check is performed to determine if the users for a certain AP at a certain location meet their QoE requirements. If so (Yes) then the flow ends, meaning no optimization needed, and the network is operating in a healthy non congested manner otherwise (No) the flow proceeds to 704 to re-visit network planning decisions according to the analysis performed in 702 and 703.

Below are examples for network analysis and optimization performed in 704 for module 204 based on the performed measurements and data analysis in 703.

In a first example for the case of mobile carrier wireless, where the cellular carrier is interested in offloading his traffic to a trusted wireless network deployed by the carrier itself. The users may monitor the strength of the wireless link or the air interface signal strength, and switch to wireless from the cellular network whenever the wireless signal is higher than a certain threshold. The users however may not get a good QoE while on the wireless network, resulting in unsatisfied customers. Using the quality analysis and optimization module 203 in accordance with example implementations, the expected quality of the air interface can be derived as a function of the end to end performance. The optimization module 204 can then provide recommendations of the type of applications that can be offloaded for a certain user to the wireless network, and what wireless air interface or channel width or number of streams the user can handle.

In another example, the quality of the wireless link can be considered good, but users continue to experience bad end to end performance, due for example to congestion at the backhaul link. In such an example, the module 204 can give recommendations for policy and network planning at the wired side as well the wireless side. Congestion can also be at the wireless link, when a large number of users are accessing the network, which leads to worsening of the end-to-end performance in network KPIs, worse packet loss rate, and probability of error at the wireless channel. The module 204 can be used to pinpoint the congestion problem and network planning decisions such as adding APs or changing traffic prioritizations can be done to relief the congestion problem.

In another example, the quality analysis and optimization tool module can be used to monitor the quality of the wireless channels, and pinpoint coverage holes. Coverage holes can be pinpointed for example when the wireless channel quality is consistently bad for a stationary user or a group of users throughout a long period of measurement and monitoring. This can be obtained without the need for obtaining the user location, in case that information is not available at the quality analysis and optimization module. For the case when the user location information is available at the network side, heatmaps can be generated from the coverage at different APs, this leads to network planning decisions related to deploying one or more APs at coverage holes locations to serve areas with no coverage. This optimization example can be applied for example to the case of cable wireless, where cable operators make use of residential access points to provide public access to subscribed users. It can also be applied to enterprise wireless environments, or other venue wireless, such as stadium wireless.

In another example, the quality analysis and optimization tool can further be used for energy efficiency optimization. The quality and usage of the wireless channels indicated by the tool can be used by the network planners to switch off some of the APs to save energy whenever they are not needed. This also reduces the interference that the APs might cause.

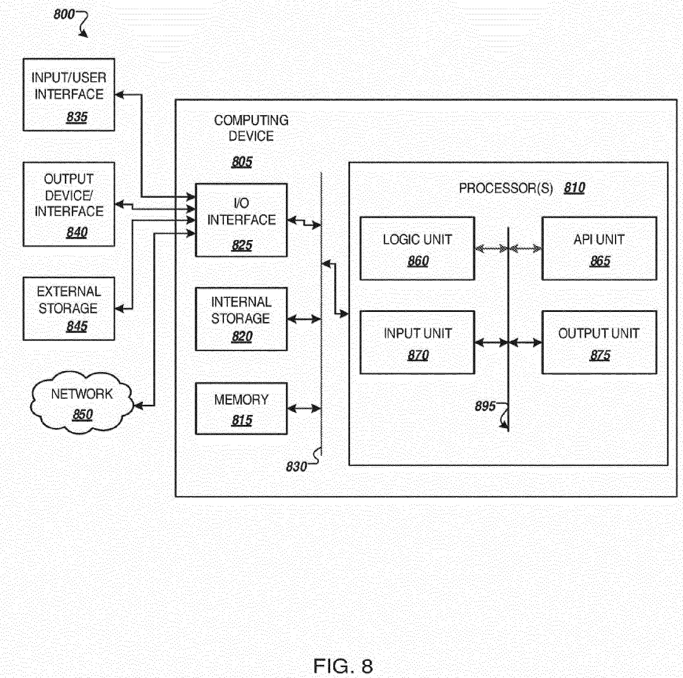

FIG. 8 illustrates an example computing environment with an example computer device suitable for use in some example implementations, such as an apparatus to facilitate the functionality of navigating another movable apparatus. Computer device 805 in computing environment 800 can include one or more processing units, cores, or processors 810, memory 815 (e.g., RAM, ROM, and/or the like), internal storage 820 (e.g., magnetic, optical, solid state storage, and/or organic), and/or I/O interface 825, any of which can be coupled on a communication mechanism or bus 830 for communicating information or embedded in the computer device 805.

Computer device 805 can be communicatively coupled to input/user interface 835 and output device/interface 840. Either one or both of input/user interface 835 and output device/interface 840 can be a wired or wireless interface and can be detachable. Input/user interface 835 may include any device, component, sensor, or interface, physical or virtual, that can be used to provide input (e.g., buttons, touch-screen interface, keyboard, a pointing/cursor control, microphone, camera, braille, motion sensor, optical reader, and/or the like). Output device/interface 840 may include a display, television, monitor, printer, speaker, braille, or the like. In some example implementations, input/user interface 835 and output device/interface 840 can be embedded with or physically coupled to the computer device 805. In other example implementations, other computer devices may function as or provide the functions of input/user interface 835 and output device/interface 840 for a computer device 805.

Examples of computer device 805 may include, but are not limited to, highly mobile devices (e.g., smartphones, devices in vehicles and other machines, devices carried by humans and animals, and the like), mobile devices (e.g., tablets, notebooks, laptops, personal computers, portable televisions, radios, and the like), and devices not designed for mobility (e.g., desktop computers, other computers, information kiosks, televisions with one or more processors embedded therein and/or coupled thereto, radios, and the like).

Computer device 805 can be communicatively coupled (e.g., via I/O interface 825) to external storage 845 and network 850 for communicating with any number of networked components, devices, and systems, including one or more computer devices of the same or different configuration. Computer device 805 or any connected computer device can be functioning as, providing services of, or referred to as a server, client, thin server, general machine, special-purpose machine, or another label.

I/O interface 825 can include, but is not limited to, wired and/or wireless interfaces using any communication or I/O protocols or standards (e.g., Ethernet, 802.11x, Universal System Bus, WiMax, modem, a cellular network protocol, and the like) for communicating information to and/or from at least all the connected components, devices, and network in computing environment 800. Network 850 can be any network or combination of networks (e.g., the Internet, local area network, wide area network, a telephonic network, a cellular network, satellite network, and the like).

Computer device 805 can use and/or communicate using computer-usable or computer-readable media, including transitory media and non-transitory media. Transitory media include transmission media (e.g., metal cables, fiber optics), signals, carrier waves, and the like. Non-transitory media include magnetic media (e.g., disks and tapes), optical media (e.g., CD ROM, digital video disks, Blu-ray disks), solid state media (e.g., RAM, ROM, flash memory, solid-state storage), and other non-volatile storage or memory.

Computer device 805 can be used to implement techniques, methods, applications, processes, or computer-executable instructions in some example computing environments. Computer-executable instructions can be retrieved from transitory media, and stored on and retrieved from non-transitory media. The executable instructions can originate from one or more of any programming, scripting, and machine languages (e.g., C, C++, C#, Java, Visual Basic, Python, Perl, JavaScript, and others).

Computer device 805 can be configured to implement the architecture as illustrated in FIG. 2, and can be facilitated to execute the flow diagrams as illustrated in FIGS. 4, 6 and 7. Memory 815 can be configured to store a function for determining quality of a wireless network from a network comprising a wired network and the wireless network, the quality determined based on one or more packet flow key performance indicators (KPIs) of the network. The function can be in the form of a predictive model for a performance metric of the network based on the one or more packet flow KPIs, as illustrated in Table 1. The function can be generated by processor(s) 810 through a process involving obtaining the one or more packet flow KPIs, obtaining performance metric information reported by one or more users associated with the apparatus, calculating the performance metric from the performance metric information, and determining the function based on the performance metric and the packet flow KPIs

Processor(s) 810 can be configured to obtain packet flows from the network, extract one or more packet flow KPIs from the packet flows, and determine quality of the wireless network from the function based on the extracted one or more packet flow KPIs, as illustrated in FIG. 4. The one or more packet flow KPIs can be indicative of end to end KPIs from the wireless network to the wired network. For packet flow KPIs indicative of the quality of the wireless network being below a threshold, the processor(s) 810 can be configured to identify one or more locations of the wireless network having the quality below the threshold based on location information from one or more user equipment associated with the packet flow KPIs indicative of the quality of the wireless network being below the threshold. Computing device 805 is configured to manage a plurality of access points, and processor(s) 810 are configured to determine the quality of the wireless network from the function based on the extracted one or more packet flow KPIs for each location of the plurality of access points.

Some portions of the detailed description are presented in terms of algorithms and symbolic representations of operations within a computer. These algorithmic descriptions and symbolic representations are the means used by those skilled in the data processing arts to convey the essence of their innovations to others skilled in the art. An algorithm is a series of defined steps leading to a desired end state or result. In example implementations, the steps carried out require physical manipulations of tangible quantities for achieving a tangible result.

Unless specifically stated otherwise, as apparent from the discussion, it is appreciated that throughout the description, discussions utilizing terms such as "processing," "computing," "calculating," "determining," "displaying," or the like, can include the actions and processes of a computer system or other information processing device that manipulates and transforms data represented as physical (electronic) quantities within the computer system's registers and memories into other data similarly represented as physical quantities within the computer system's memories or registers or other information storage, transmission or display devices.

Example implementations may also relate to an apparatus for performing the operations herein. This apparatus may be specially constructed for the required purposes, or it may include one or more general-purpose computers selectively activated or reconfigured by one or more computer programs. Such computer programs may be stored in a computer readable medium, such as a computer-readable storage medium or a computer-readable signal medium. A computer-readable storage medium may involve tangible mediums such as, but not limited to optical disks, magnetic disks, read-only memories, random access memories, solid state devices and drives, or any other types of tangible or non-transitory media suitable for storing electronic information. A computer readable signal medium may include mediums such as carrier waves. The algorithms and displays presented herein are not inherently related to any particular computer or other apparatus. Computer programs can involve pure software implementations that involve instructions that perform the operations of the desired implementation.

Various general-purpose systems may be used with programs and modules in accordance with the examples herein, or it may prove convenient to construct a more specialized apparatus to perform desired method steps. In addition, the example implementations are not described with reference to any particular programming language. It will be appreciated that a variety of programming languages may be used to implement the teachings of the example implementations as described herein. The instructions of the programming language(s) may be executed by one or more processing devices, e.g., central processing units (CPUs), processors, or controllers.

As is known in the art, the operations described above can be performed by hardware, software, or some combination of software and hardware. Various aspects of the example implementations may be implemented using circuits and logic devices (hardware), while other aspects may be implemented using instructions stored on a machine-readable medium (software), which if executed by a processor, would cause the processor to perform a method to carry out implementations of the present application. Further, some example implementations of the present application may be performed solely in hardware, whereas other example implementations may be performed solely in software. Moreover, the various functions described can be performed in a single unit, or can be spread across a number of components in any number of ways. When performed by software, the methods may be executed by a processor, such as a general purpose computer, based on instructions stored on a computer-readable medium. If desired, the instructions can be stored on the medium in a compressed and/or encrypted format.

Moreover, other implementations of the present application will be apparent to those skilled in the art from consideration of the specification and practice of the teachings of the present application. Various aspects and/or components of the described example implementations may be used singly or in any combination. It is intended that the specification and example implementations be considered as examples only, with the true scope and spirit of the present application being indicated by the following claims.

**Claims**

1.   An apparatus, comprising:

   a memory configured to store a function for determining quality of a wireless network from a network comprising a wired network and the wireless network,
   the quality determined based on one or more packet flow key performance indicators (KPIs) of the network overall as determined from the wired network;
   a processor, configured to:

      obtain packet flows from the network;
      extract one or more packet flow KPIs from the packet flows; and
      determine quality of the wireless network from the function based on the extracted one or more packet flow KPIs.

2.   The apparatus of claim 1, wherein the function is a predictive model for a performance metric of the network based on the one or more packet flow KPIs.

3.   The apparatus of claim 2, wherein the function is generated by a process comprising:

   obtaining the one or more packet flow KPIs;
   obtaining performance metric information reported by one or more UEs associated with the apparatus;
   calculating the performance metric from the performance metric information; and
   determining the function based on the performance metric and the packet flow KPIs.

4.   The apparatus of claim 1, wherein the one or more packet flow KPIs are indicative of end to end KPIs from the wireless network to the wired network.

5.   The apparatus of claim 1, wherein the processor is configured to, for packet flow KPIs indicative of the quality of the wireless network being below a threshold:

   identify one or more locations of the wireless network having the quality below the threshold based on location information from one or more user equipment associated with the packet flow KPIs indicative of the quality of the wireless network being below the threshold.

6.   The apparatus of claim 1, wherein the apparatus is configured to manage a plurality of access points, and wherein the processor is configured to determine the quality of the wireless network from the function based on the extracted one or more packet flow KPIs for each location of the plurality of access points.

7.   A method, comprising:

storing a function for determining quality of a wireless network from a network comprising a wired network and the wireless network, the quality determined based on one or more packet flow key performance indicators (KPIs) of network overall as determined from the wired network;
obtaining packet flows from the network;
extracting one or more packet flow KPIs from the packet flows; and
determining quality of the wireless network from the function based on the extracted one or more packet flow KPIs.

8. The method of claim 7, wherein the function is a predictive model for a performance metric of the network based on the one or more packet flow KPIs.

9. The method of claim 8, wherein the function is generated by a process comprising:

obtaining the one or more packet flow KPIs;
obtaining performance metric information reported by one or more UEs associated with the apparatus;
calculating the performance metric from the performance metric information; and
determining the function based on the performance metric and the packet flow KPIs.

10. The method of claim 7, wherein the one or more packet flow KPIs are indicative of end to end KPIs from the wireless network to the wired network.

11. The method of claim 7, further comprising, for packet flow KPIs indicative of the quality of the wireless network being below a threshold:

identify one or more locations of the wireless network having the quality below the threshold based on location information from one or more user equipment associated with the packet flow KPIs indicative of the quality of the wireless network being below the threshold.

12. The method of claim 7, further comprising managing a plurality of access points, and determining the quality of the wireless network from the function based on the extracted one or more packet flow KPIs for each location of the plurality of access points.

13. A non-transitory computer readable medium, storing instructions for executing a process, the instructions comprising:

storing a function for determining quality of a wireless network from a network comprising a wired network and the wireless network, the quality determined based on one or more packet flow key performance indicators (KPIs) of network overall as determined from the wired network;
obtaining packet flows from the network;
extracting one or more packet flow KPIs from the packet flows; and
determining quality of the wireless network from the function based on the extracted one or more packet flow KPIs.

14. The non-transitory computer readable medium of claim 13, wherein the function is a predictive model for a performance metric of the network based on the one or more packet flow KPIs.

15. The non-transitory computer readable medium of claim 14, wherein the function is generated by a process comprising:

obtaining the one or more packet flow KPIs;
obtaining performance metric information reported by one or more UEs associated with the apparatus;
calculating the performance metric from the performance metric information; and
determining the function based on the performance metric and the packet flow KPIs.

FIG. 1

TCP/UDP session
incoming packets

Quality analysis and
optimization module
200

Packet processing entity
201

KPI and feature extraction
entity 202

Analysis entity 203

visualization module 205

Visualization an[
control by the us[

Optimization entity 204

FIG. 2

FIG. 3

Start

Obtain content at quality analysis training module about TCP traces to be used for measurements from network software agent 401

Obtain content at quality analysis training module about signal level and link quality at users from user software agent 402

Calculate average aggregated RTT, throughput, anomalies in TCP, congestion window size, etc. using measurement data 403

No — Results conclusive? 404

Yes

Derive a model for wireless link quality (RSSI, SINR, PER, etc..) as a function of calculated network KPIs 405

No — Results conclusive? 406

Yes

End

FIG. 4

EP 3 197 198 A1

FIG. 5

16

```
                              ┌─────────────┐
                              │    Start    │
                              └──────┬──────┘
                                     │
    ┌ ─ ─ ─ ─ ─ ─ ─ ─ ─ ─ ─ ─ ─ ─ ─ ─│─ ─ ─ ─ ─ ─ ─ ─ ─ ─ ─ ─ ─ ┐
    │        ╱────────────────────────▼──────────────────────╱  │
    │       ╱   Capture information on packet flows          ╱   │
    │      ╱     for the network of interest 601            ╱    │
    │     ╱────────────────────────┬───────────────────────╱     │
    │    ╱─────────────────────────▼──────────────────────────╱  │
    │   ╱  Compute statistical aggregate KPIs on the packet  ╱   │
    │  ╱   flows such as aggregate RTT, throughput, PLR,     ╱    │
    │ ╱    etc.. 602                                        ╱     │
    │╱─────────────────────────────┬──────────────────────╱      │
    │   ┌──────────────────────────▼───────────────────────┐     │
    │   │  Derive the quality of the wireless channel to    │     │
    │   │  the individual users from the computed           │     │
    │   │  statistics 603                                   │     │
    │   └──────────────────────────┬───────────────────────┘     │
    │                              │                             │
    │            ┌─────────────────┴─────────────────┐           │
    └ ─ ─ ─ ─ ─ ─│─ ─ ─ ─ ─ ─ ─ ─ ─ ─ ─ ─ ─ ─ ─ ─ ─ ─│─ ─ ─ ─ ─ ┘
        ┌────────▼────────┐               ┌───────────▼──────────┐
        │ Optimization    │               │ Visualization module │
        │ entity 204      │               │ 205                  │
        └─────────────────┘               └──────────────────────┘
```

FIG. 6

Start

Derive performance of WiFi network access and wired links 701

Run data analytics to classify the traffic and the users into classes for optimization 702

Users meet their QoE requirements? 703

Yes → End

No

Re-visit network planning decisions according to the root cause analysis performed 704

FIG. 7

FIG. 8

Europäisches
Patentamt

European
Patent Office

Office européen
des brevets

# EUROPEAN SEARCH REPORT

Application Number

EP 16 20 2360

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X<br><br>Y | US 2014/269269 A1 (KOVVALI SURYA KUMAR [US] ET AL) 18 September 2014 (2014-09-18)<br>* paragraph [0008] - paragraph [0027] *<br>* paragraph [0035] - paragraph [0061] *<br>* paragraph [0080] - paragraph [0085] *<br>* paragraph [0180] - paragraph [0206] *<br>----- | 1,4-7,<br>10-13<br><br>2,3,8,9,<br>14,15 | INV.<br>H04W24/02<br>H04W24/04<br>H04W24/08<br>H04L12/26<br>H04W16/18 |
| Y | US 2005/265321 A1 (RAPPAPORT THEODORE [US] ET AL) 1 December 2005 (2005-12-01)<br>* paragraph [0092] - paragraph [0118] *<br>* paragraph [0054] - paragraph [0078] *<br>----- | 2,3,8,9,<br>14,15 | ADD.<br>H04L12/24 |
| X | US 2013/219048 A1 (ARVIDSSON AAKE [SE] ET AL) 22 August 2013 (2013-08-22)<br>* paragraph [0032] - paragraph [0044] *<br>* paragraph [0060] - paragraph [0070] *<br>----- | 1,7,13 | |
| X | US 2014/241159 A1 (KAKADIA DEEPAK [US] ET AL) 28 August 2014 (2014-08-28)<br>* paragraph [0017] - paragraph [0021] *<br>* paragraph [0032] *<br>* paragraph [0050] - paragraph [0058] *<br>----- | 1,7,13 | |
| X | WO 2014/155035 A1 (BRITISH TELECOMM [GB]) 2 October 2014 (2014-10-02)<br>* page 6, line 10 - page 7, line 6 *<br>* page 11, line 10 - page 13, line 21 *<br>* page 15, line 25 - page 16, line 4 *<br>----- | 1,7,13 | TECHNICAL FIELDS SEARCHED (IPC)<br><br>H04W<br>H04L |
| A | US 2015/296395 A1 (VADERNA PETER [HU] ET AL) 15 October 2015 (2015-10-15)<br>* paragraph [0061] - paragraph [0065] *<br>----- | 2,6,8,<br>12,14 | |

The present search report has been drawn up for all claims

| Place of search | Date of completion of the search | Examiner |
|---|---|---|
| Munich | 1 June 2017 | Stefanis, Dimitrios |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 16 20 2360

This annex lists the patent family members relating to the patent documents cited in the above-mentioned European search report.
The members are as contained in the European Patent Office EDP file on
The European Patent Office is in no way liable for these particulars which are merely given for the purpose of information.

01-06-2017

| Patent document cited in search report | | Publication date | Patent family member(s) | | Publication date |
|---|---|---|---|---|---|
| US 2014269269 | A1 | 18-09-2014 | NONE | | |
| US 2005265321 | A1 | 01-12-2005 | AT | 372620 T | 15-09-2007 |
| | | | AU | 9114801 A | 08-04-2002 |
| | | | AU | 2001291148 A2 | 08-04-2002 |
| | | | BR | 0114232 A | 20-07-2004 |
| | | | CA | 2423157 A1 | 04-04-2002 |
| | | | CN | 1498382 A | 19-05-2004 |
| | | | DE | 60130352 T2 | 31-07-2008 |
| | | | EP | 1328881 A1 | 23-07-2003 |
| | | | JP | 2004510372 A | 02-04-2004 |
| | | | KR | 20030059152 A | 07-07-2003 |
| | | | MX | PA03002652 A | 25-09-2003 |
| | | | US | 6973622 B1 | 06-12-2005 |
| | | | US | 2005265321 A1 | 01-12-2005 |
| | | | WO | 0227564 A1 | 04-04-2002 |
| US 2013219048 | A1 | 22-08-2013 | EP | 2817946 A1 | 31-12-2014 |
| | | | US | 2013219048 A1 | 22-08-2013 |
| | | | WO | 2013124763 A1 | 29-08-2013 |
| US 2014241159 | A1 | 28-08-2014 | NONE | | |
| WO 2014155035 | A1 | 02-10-2014 | EP | 2784984 A1 | 01-10-2014 |
| | | | EP | 2979398 A1 | 03-02-2016 |
| | | | US | 2016057028 A1 | 25-02-2016 |
| | | | WO | 2014155035 A1 | 02-10-2014 |
| US 2015296395 | A1 | 15-10-2015 | EP | 2934037 A1 | 21-10-2015 |
| | | | US | 2015296395 A1 | 15-10-2015 |

EPO FORM P0459

For more details about this annex : see Official Journal of the European Patent Office, No. 12/82

**EP 3 197 198 A1**

## REFERENCES CITED IN THE DESCRIPTION

**Patent documents cited in the description**

- US 8583777 B
- US 6745011 B
- US 20110119370 A